# EUROPEAN PATENT SPECIFICATION

(11) **EP 1 022 212 B1**
(45) Date of publication and mention of the grant of the patent: **16.06.2004**
(21) Application number: 98953098.5
(22) Date of filing: 09.11.1998
(51) Int. Cl.: B62D 33/06

(54) **IMPROVED STRUCTURE FOR A CABIN OF THE CAB-OVER-ENGINE TYPE , FOR MEDIUM TRUCKS AS WELL AS LARGE TRUCKS**
VERBESSERTE STRUKTUR EINES FAHRERHAUSES FÜR FRONTLENKER MITTEL-SCHWERE UND SCHWERE LASTKRAFTWAGEN
STRUCTURE AMELIOREE DE CABINE AVANCEE POUR CAMIONS MOYENS ET TRACTEURS ROUTIERS

(30) Priority: 07.11.1997 MX 9708574
(43) Date of publication of application: 26.07.2000
(73) Proprietor: Consorcio G Grupo Dina, S.A. de C.V., Delegacion Benito Juarez, Mexico, D.F. 03100 (MX)
(72) Inventor: MONDRAGON SARMIENTO, Francisco, Garzas 48, México 52967 (MX); MIRANDA GUERRERO, Roberto, Mar del Néctar 17, México 53280 (MX); ESPINOSA RUIZ, Alejandro, Froylan 86, Pachuca, Hidalgo 42040 (MX); GONZALEZ GUADARRAMA, Carlos 2a Cda 2 de Ab. 50/207, México 52967 (MX)
(74) Representative: Frohwitter, Bernhard, Dipl.-Ing.
(86) International application number: PCT/MX1998/000050
(87) International publication number: WO 1999/024310

(56) References cited:
- EP-A- 0 374 488
- GB-A- 645 341
- GB-A- 1 501 390
- US-A- 2 959 239
- US-A- 3 055 699
- "INTEGRATED COMPONENTS REDUCE REDUNDANCY AND WEIGHT IN TRUCK CAB" DESIGN ENGINEERING, no. 2, February 1985, page 22 XP002072375

## Description

The present invention refers to an improved structure of a cabin that will be used preferably in trucks denominated "Cab-Over" and that could be used indistinctly both for cabins of heavy and medium trucks. The cabin in a modular form according to the present invention could be mix constructed in the same assembly line for different types of motor vehicles, without the need of stopping the production line.

As its known for a person skilled in the art, a medium truck is, with regard to its construction, design and usage, not used for hauling any type of trailer and the load that it transports, is no greater than 19 t. In terms of the regulations of the Ministry of Communications and Transports and according to international standards, a medium truck is a motor vehicle with chassis for the transportation of goods or less than 10 persons, with a vehicular gross weight between 6,351 to 19,000 kg.

On the contrary, a heavy truck is, with regard to its construction, design and usage, used for the hauling of trailers of all kind and it is designed for the transportation of great loads through long distances through the highways. In terms of the regulations of the Ministry of Communications and Transports, and according to international standards, a heavy truck is a motor vehicle with two or three axles destined for the transportation of goods, either by means of hauling trailers, semi-trailers or with integrated equipment, with a total vehicle gross weight of 30,000 kg or more.

GB 645 341 A relates to car bodies having a bearer framework. These known car bodies are manufactured from double bent tubular sections without the use of expensive presses. That means that various parts and structure elements are drawn from thin-walled straight or sectional members which are bent and after bending fixed together to form tubular sections. By means of these composed tubular sections welded together, a welded metal skeleton for a drivers cab is achieved. The entire welded metal framework cabin is supported on a chassis and comprises a flat wooden floor board. With the lower door frame members being assigned to coincide with the flat shape of the floor board. A front post which is part of the cabin structure forms a part of the door frame, which means that the partial door frame is adjusted to the post of the cabin structure rather than forming a separate substantially completely closed profile member as such. To increase the stiffness of the cabin wooden plates are clad to the metal skeleton including a rear window of the cabin. The flat wooden floor board is supported by wooden frames connected to the chassis supporting the cabin.

US-A-2,959,239 describes a type of cabins that can be used for various types of trucks. The cab as a whole is built upon main stress bearing members such as two longitudinal members and two cross members. That means the manufacturing of a truck cabin which can be used for various types of trucks is described. The design of this known truck cabin is such that it is mounted on chassis side members. Front and rear windows are of approximately the same shape so that the arcuate portion of the door frame adjusts to the wheel when the cabin is arranged forward to the front axis and by turning the entire cabin by 180° adjusts to the front wheel when the cabin is arranged behind the front wheel axis.

GB-A-1,501,390 that forms the closest prior art according to the preamble of claim 1 describes vehicle cabins, and in particularly is focused on a panel sections clad cabin frame. This known cabin frame structure might as well be used for a cab-over type truck. The shape of the door frame is different from stepwise arranged floor beams between which the engine is provided.

GB 645 341 A relates to car bodies having a bearer framework. These known car bodies are manufactured from double bent tubular sections without the use of expensive presses. That means that various parts and structure elements are drawn from thin-walled straight or sectional members which are bent and after bending fixed together to form tubular sections. By means of these composed tubular sections welded together, a welded metal skeleton for a drivers cab is achieved. The entire welded metal framework cabin is supported on a chassis and comprises a flat wooden floor board. With the lower door frame members being assigned to coincide with the flat shape of the floor board. A front post which is part of the cabin structure forms a part of the door frame, which means that the partial door frame is adjusted to the post of the cabin structure rather than forming a separate substantially completely closed profile member as such. To increase the stiffness of the cabin wooden plates are clad to the metal skeleton including a rear window of the cabin. The flat wooden floor board is supported by wooden frames connected to the chassis supporting the cabin.

US-A-2,959,239 describes a type of cabins that can be used for various types of trucks. The cab as a whole is built upon main stress bearing members such as two longitudinal members and two cross members. That means the manufacturing of a truck cabin which can be used for various types of trucks is described. The design of this known truck cabin is such that it is mounted on chassis side members. Front and rear windows are of approximately the same shape so that the arcuate portion of the door frame adjusts to the wheel when the cabin is arranged forward to the front axis and by turning the entire cabin by 180° adjusts to the front wheel when the cabin is arranged behind the front wheel axis.

GB-A-1,501,390 describes vehicle cabins, and in particularly is focused on a panel sections clad cabin frame. This known cabin frame structure might as well be used for a cab-over type truck. The shape of the door frame is different from stepwise arranged floor beams between which the engine is provided.

That means the shape of the internal floor does not coincide with the shape of the door frame.

That means the shape of the internal floor does not coincide with the shape of the door frame.

A truck of a cab-over type could - because of its construction, design and usage - be used for the transportation of loads, in the same way like a medium truck with a front part (trunk) and could also be used for hauling trailers of all types, in the same way like conventional trucks.

One of the main characteristics of cab-over trucks, is that they do not have a trunk because the engine is located underneath the cabin floor. To check the engine, the cabin in its totality, has to be forwardly raised.

The object of this invention is to provide an improved structure of a cabin that can be used indistinctly in cab-over trucks, medium trucks and heavy trucks and can be constructed indistinctly in the same assembly line for each one of the models of the mentioned trucks and those of the conventional type.

This object is solved by a modular cabin frame structure with the features according to claim 1. Preferred embodiments are defined in the dependent claims.

The inventive modular cabin frame structure is formed with sub-assembly parts and is designed to be common between cab-over type, medium and heavy as well as conventional trucks.

The modular cabin frame structure forming frames comprises
two side frames for the left and right hand doors respectively, which have an irregular shape corresponding to the shape of the floor, underneath which the engine is placed, and which have two reinforcing elements for each door frame a the front part thereof;
a rear frame section of the cabin having four comer pieces, one upper and one lower comer piece both at the right and the left side and two reinforcing posts for the rear panel, one left and one right post, and a rear member connecting floor support beams and two reinforcements for the posts of the rear panel;
a top frame section having a header beam, two side top pieces, a left one and a right one, a transverse crossbar, a rear beam, two longitudinal braces, or cross members, respectively, i.e. a left one and a right one;
a floor frame section of irregular shape having a cavity or tunnel where the engine is to be placed, the irregular shape following the shape of the door frames and the floor extending from the rear frame section up to the transmission cover and at this point folding downwardly with the required inclination to join with a front floor portion, so that the cabin floor follows the shape of the door frames;
a front part having a cowl in the shape of a half mask for supporting a windscreen wiper for a windscreen and three reinforcement parts for the half mask and the floor of the cabin itself, in particular a cowl reinforcement, a left and a right post joining the top frame section and a windscreen reinforcing beam which together with said posts and said header beam form a windscreen aperture.

Traditionally, in the design specifications of the cabins for medium trucks, specific designs and dimensions are used. Therefore, in spite of the same shape, the dimensions of its components vary and consequently, are produced in different assembly lines.

In the traditional construction of cabins for medium trucks and for heavy trucks, it is not possible to use at the same time the same assembly line, mainly due to the fact that the kits of tools that are used in the assembly line for one or the other type of cabin, are also different; consequently, the assembly line has to be stopped for the change of the kits of tools or two different production lines are required resulting in loss of time, increased production costs, investment in the kits of tools and labor costs.

The inventive modular cabin frame structure overcomes these drawbacks.

The different parts the structure of the cabin consists of are preferably fabricated from high resistance steel plates, which are molded in stamp presses. The parts of the structure of the cabin contain spliced flanges and are fixed with high resistance joints.

The components of the structure may also be fabricated from other high resistance materials, such as aluminium, thermoformed plastic, SMC or fibreglass without being limited thereto.

One embodiment of the invention will now be described in conjunction with the attached figures, in which:
- Fig. 1: shows a 30° isometric view of the structure of the cabin;
- Fig. 2: shows a view of the left door frame of the structure of the cabin, which has an irregular shape, the floor of the cabin being adjusted to that shape and the right door frame (not shown) being mirror-inverted;
- Fig. 3: shows the top view of the structure of the cabin; and
- Fig. 4: shows the front view of the structure of the cabin.

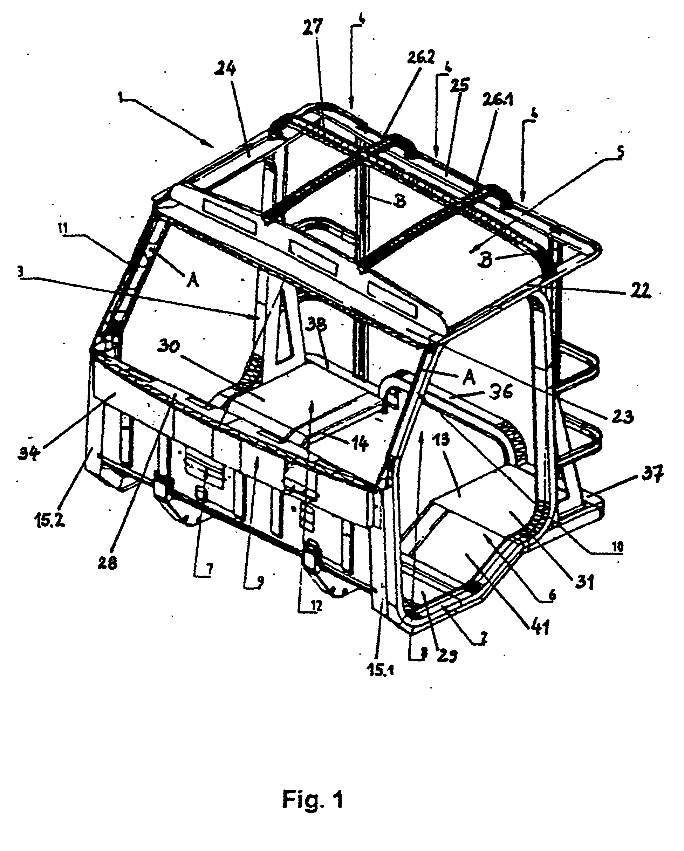

Referring to Fig. 1 of the attached drawings, the cabin frame structure 1 of the cab-over type cabin is formed preferably by parts of high resistance steel plates, which are molded in stamping presses or with standard tools; the parts the structure of the cabin consists of contain flanges that are spliced and fixed with high resistance joints.

The structure of the cabin is formed of two lateral or side frame sections comprising a left door ring frame 2 and a right door ring frame 3, respectively, being likewise connected to the rear frame section 4 of the cabin; where both the door frames 2 and 3 with their irregular shape are connected to the rear frame section 4 of the cabin, joined with the top part 5 and to the floor frame section. The floor with its irregular shape extends from the rear frame section 4 and precisely, leaves a space 8 for an engine to be installed, forming likewise an area for a transmission cover (not represented), which is placed afterwards, though not being a part of the structure and at this point folds downwardly with the required inclination for joining with lower front floor plates 29 in the front part 7 of the cabin.

The front part 7 of the cabin is arranged upwardly with the required inclination for joining with a front cover plate 9 as half mask cover for a windscreen wiper motor support, which by means of two windscreen opening posts 10A, 11A, the pillars "A", a left one 10A and a right one 11A, joins the top part 5, forming a windscreen aperture where the windscreen will be installed.

The structure of the cabin has an interior space 12 for a driver and a co-driver. In this area, the accessories and additions such as the instrument panel, the seats, the steering wheel, the steering column, the pedals, the sun visors, the carpets, the vestments and the glove trunk, and in general, all the interior components that integrates the cabin of a truck will be installed.

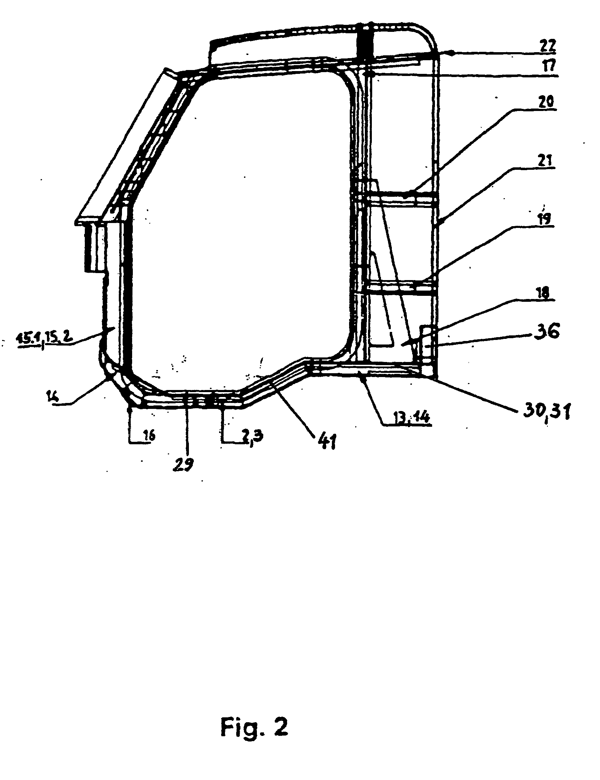

Referring to Fig. 2 of the attached drawings, the left door ring frame 2 is shown which in the floor has an irregular shape, and the shape of the floor being adjusted to said shape of the door ring frames 2, 3 and the floor being assembled by means of a left floor support beam 13 which follows the irregular shape of the floor and of the door ring frame 2, and likewise a right floor support beam 14. The door ring frames 2, 3 are fixed by high resistance joints to a first left side reinforcing element 15.1 and a second right side reinforcing element 15.2, respectively. The reinforcing elements 15.1, 15.2 are joined with the floor support beams 13, 14 by respective upwards front reinforcements 16.

The door ring frame 2 is fixed to a left rear reinforcement 17 which carries a second reinforcing element 18.

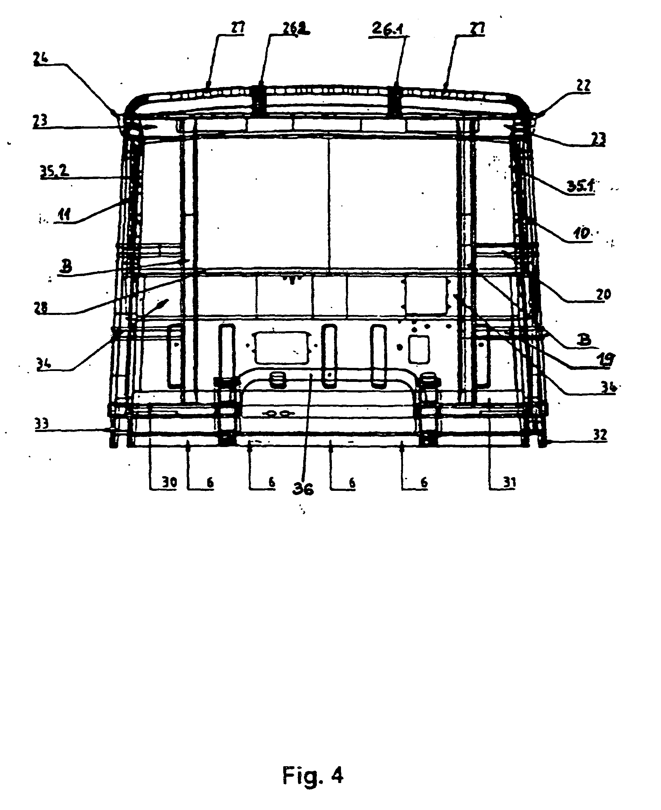

The rear frame section 4 comprises lower comer pieces 19 (left and right) and upper corner pieces 20 (left and right), which are fixed to a left reinforcing/supporting post 17, B (see Fig. 1 & 4) and to a right reinforcing/supporting post 17, B, respectively. The left reinforcing post 17, B, in its upper part, joins to a rear beam 25, which forms part of the rear frame section 4 and of the top frame section 5; the left reinforcing post 17, B, in its lower part, joins to a left upper floor plate 31.

The description of Fig. 2, as mentioned above, refers to the left door ring frame 2 structure. The parts that form the right door ring frame 3 structure have their counterparts (mirror-inverted), not shown in the attached figures.

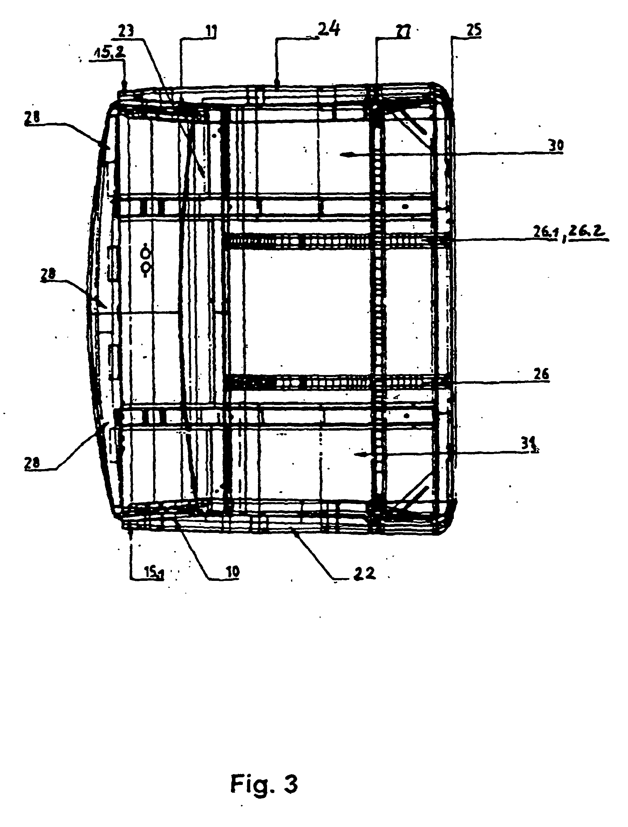

Referring to Fig. 3 of the attached drawings, a top view of the cabin is shown.

The top frame section comprises a header beam 23, said left side top piece 22 and said right side top piece 24, said rear beam 25, which are reinforced by two longitudinal braces, a left cross member 26.1 and a right cross member 26.2, which are mounted to a transverse crossbar 27. Both longitudinal braces 26.1, 26.2 extend from the rear beam 25 to the header beam 23.

The header beam 23 is connected with the windscreen opening left post 10, A and the windscreen opening right post 11, A, which at the respective side each join to the (half mask) windscreen reinforcing beam 28 and to the first left side reinforcing element 15.1 and to the right side reinforcing element 15.2, forming the frame of the windscreen.

A right upper floor plate 30 and a left upper floor plate 31 can also be seen from Fig. 3.

Referring to the front view of the cabin according to Fig. 4 of the attached drawings, the front part 7 of the structure of the cabin is shown, from which the structure of the cabin floor section 6 with the right upper floor plate 30 and the left upper floor plate 31 can be seen which are reinforced by a main left reinforcement 32 and a main right reinforcement 33.

The assemblage of the right lateral floor 30, 41, 29 and the assemblage of the left lateral floor 31, 41, 29 is joined to the cowl 34 (half mask cover) for windscreen wiper support at the windscreen reinforcing beam 28.

The assemblage of the windscreen reinforcing beam 28 joins the lower parts of the left post 10, A and the right post 11, A and the half mask cover of the windshield wiper support 34. The left post 10, A and the right post 11, A in their upper part join the header 23, with the left cross member 26.1 and the right cross member 26.2 being shown. Likewise, the transverse crossbar 27 fixed to the cross members 26.1, 26.2 and to the top pieces 22, 24 is shown.

The front view according to Fig. 4 of the structure of the cabin shows the assemblage formed by the lower comer pieces 19 and the upper comer pieces 20 of the rear frame section 4, which are joined to the left rear reinforcing post 17, B and to the right rear reinforcing post 17, B, for forming the structure for the rear panel 21 together with the left rear panel reinforcement 37 and with the right rear panel reinforcement 39 which are joined with the rear reinforcing support 36. The cowl 34 includes an adequate hole for the installation for a wiper motor, not shown, as well as other holes adequate for the electric installation, the air conditioner, etc., not shown in the figures.

Due to the fact that several modifications could be made to the present invention as described and because many of them apparently will incorporate improvements within the scope of the claims, all the matters contained in the specification are to be interpreted in an illustrative rather than in a limiting manner.

### List of reference numerals

- 1: cabin frame structure
- 2: left door ring frame
- 3: right door ring frame
- 4: rear frame section
- 5: top part of the cabin
- 6: cabin floor section
- 7: front part of the cabin
- 8: space for the engine
- 9: front cover plate
- 10, A: windscreen opening left post
- 11, A: windscreen opening right post
- 12: interior space of the cabin
- 13: left floor support beam
- 14: right floor support beam
- 15.1: first left side reinforcing element
- 15.2: first right side reinforcing element
- 16: upwards front reinforcement of floor support beams (left and right)
- 17, B: rear reinforcing posts (left and right)
- 18: second reinforcing element (left and right)
- 19: lower comer piece (left and right)
- 20: upper comer piece (left and right)
- 21: rear panel
- 22: left side top piece
- 23: header beam
- 24: right side top piece
- 25: rear beam
- 26.1: left cross member
- 26.2: right cross member
- 27: transverse cross bar
- 28: windscreen reinforcing beam
- 29: lower floor plate (left and right)
- 30: right upper floor plate
- 31: left upper floor plate
- 32: main left reinforcement
- 33: main right reinforcement
- 34: cowl (windscreen wiper support)
- 35.1: left trim reinforcement (windscreen opening)
- 35.2: right trim reinforcement (windscreen opening)
- 36: rear reinforcing support
- 37: left rear panel reinforcement
- 38: right rear panel reinforcement

## Claims

1. A modular cabin frame structure (1) for a cab-over type truck comprising
a) two side frame sections forming frames (2, 3) for the left and right hand doors respectively, each having an irregular shape and a first reinforcing element (15.1, 15.2) for each door frame (2, 3) at the frontal part thereof;
b) a top frame section comprising a header beam (23), two side top pieces (22, 24) and two longitudinal braces (26.1, 26.2);
c) a rear frame section (4) comprising four corner pieces (19, 20), one upper one (20) and one lower one (19) on each side, and two reinforcing posts (17, B) connected to two rear panel reinforcements (37, 38) and reaching to said top frame section;
d) a floor frame section of irregular shape forming a cavity preferably for mounting the engine;
e) a front part (7) comprising a cowl (34) for supporting a windscreen wiper motor, a cowl reinforcement, a left post (10, A) and a right post (11, A) joining to said top frame section; and
f) a windscreen reinforcing beam (28) together with said posts (10, A; 11, A) and said header beam (23) forming a windscreen aperture;
**characterized in that**
g) each door frame (2, 3) comprises a second reinforcing element (18) at the rear part thereof;
h) said top frame section comprises a transverse cross bar (27) interconnected to said side top pieces (22, 24) and said longitudinal braces (26.1, 26.2); and
i) floor support beams (13, 14) connected to each other in said rear frame section by a rear reinforcing support (36) and supporting floor plates (29, 30, 31, 41) and interconnecting said reinforcing support (36) of said rear fraime section (4) and said front panel (7), the shape of said floor support beams (13, 14) corresponding to said shape of the door frames (2, 3) and to the shape of the cabin floor.

2. Modular cabin frame structure (1) according to claim 1, **characterized in that** the cabin floor with its upper floor plate (30, 31) extends horizontally from the rear frame section and with its intermediate floor plate (41) downwardly from the horizontal upper floor plate (30, 31) and with its lower floor plate (29) horizontally to a front floor portion, substantially following the shape of the lower part of said door frames (2, 3).

3. Modular cabin frame structure (1) according to claims 1 or 2, **characterized in that** the parts are made of high resistant steel, aluminum, thermoplastic, fiber glass, plastics sheet molding compound (SMC) or combinations thereof.

4. Modular cabin frame structure (1) according to anyone of the claims 1 to 3, **characterized in that** the panels and plates are fixed to the cabin frame structure by high resistance joints.

5. Modular cabin frame structure (1) according to anyone of the claims 1 to 4, **characterized in that** the rear frame section and the top frame section are integrated structures, their parts being jointly fixed to each other.

6. Modular cabin frame structure (1) according to anyone of the claims 2 to 5, **characterized in that** the door frames (2, 3) in their upper parts join the side top pieces (22, 24) of the top frame section and in their lower parts join the upper floor plates (30, 31).

7. Modular cabin frame structure (1) according to anyone of the claims 1 to 6, **characterized in that** the door frames (2, 3) are made in mirror-symmetry.

## Patentansprüche

1. Modulare Fahrerhausrahmenstruktur (1) für einen Frontlenker-Lastkraftwagen, umfassend:
a) zwei Seitenrahmenabschnitte, die Rahmen (2, 3) für die linke bzw. rechte Tür bilden, von denen jeder eine unregelmäßige Form und für jeden Türrahmen (2, 3) an seinem Vorderteil ein erstes Verstärkungselement (15.1, 15.2) aufweist;
b) einen Oberrahmenabschnitt, der einen oberen Querträger (23), zwei obere Seitenstücke (22, 24) und zwei Längsträger (26.1, 26.2) aufweist;
c) einen Rückrahmenabschnitt (4), der vier Eckstücke (19, 20) - auf jeder Seite ein oberes (20) und ein unteres (19) - sowie zwei Verstärkungssäulen (17, B), die mit zwei Rückblechverstärkungen (37, 38) verbunden sind und zum Oberrahmenabschnitt reichen, aufweist;
d) einen Bodenrahmenabschnitt einer unregelmäßigen Form, der vorzugsweise zur Unterbringung des Motors einen Hohlraum bildet;
e) einen Vorderteil (7), der einen Windlaufquerträger (34) zum Unterstützen eines Windschutzscheiben-Wischermotors, eine Windlaufquerträger-Verstärkung, eine linke Säule (10, A) und eine rechte Säule (11, A) aufweist, die eine Verbindung zum Oberrahmenabschnitt herstellt; und
f) einen Windschutzscheiben-Verstärkungsträger (28), der zusammen mit den Säulen (10, A; 11, A) und dem oberen Querträger (23) einen Windschutzscheibenausschnitt bildet;
**dadurch gekennzeichnet, dass**
g) jeder Türrahmen (2, 3) an seinem hinteren Teil ein zweites Verstärkungselement (18) aufweist;
h) der obere Rahmenabschnitt einen Querträger (27) aufweist, der mit den zwei oberen Seitenstücken (22, 24) und den Längsträgern (26.1, 26.2) verbunden ist; und
i) Bodenstützträger (13, 14) im hinteren Rahmenabschnitt über eine hintere Verstärkungsstütze (36) und Stützbodenplatten (29, 30, 31, 41) miteinander verbunden sind und die Verstärkungsstütze (36) des hinteren Rahmenabschnitts (4) und den Vorderteil (7) miteinander verbinden, wobei die Form der Bodenstützträger (13, 14) der Form der Türrahmen (2, 3) und der Form des Fahrerhausbodens folgt.

2. Modulare Fahrerhausrahmenstruktur (1) nach Anspruch 1, **dadurch gekennzeichnet, dass** der Fahrerhausboden sich mit seiner oberen Bodenplatte (30, 31) waagrecht vom Rückrahmenabschnitt und mit seiner Zwischenbodenplatte (41) von der waagrechten oberen Bodenplatte (30, 31) nach unten und mit seiner unteren Bodenplatte (29) waagrecht zu einem vorderen Bodenteil hin erstreckt, wobei er im Wesentlichen der Form des unteren Teils der Türrahmen (2, 3) folgt.

3. Modulare Fahrerhausrahmenstruktur (1) nach Anspruch 1 oder 2, **dadurch gekennzeichnet, dass** die Teile aus hochfestem Stahl, Aluminium, Thermoplast, Faser, Glas, Plastikformteilen oder Kombinationen davon bestehen.

4. Modulare Fahrerhausrahmenstruktur (1) nach einem der Ansprüche 1 bis 3, **dadurch gekennzeichnet, dass** die Bleche und Platten mit hochfesten Verbindung an der Fahrerhausrahmenstruktur befestigt sind.

5. Modulare Fahrerhausrahmenstruktur (1) nach einem der Ansprüche 1 bis 4, **dadurch gekennzeichnet, dass** der Rückrahmenabschnitt und der Oberrahmenabschnitt integrierte Strukturen sind, wobei ihre Teile untereinander fest verbunden sind.

6. Modulare Fahrerhausrahmenstruktur (1) nach einem der Ansprüche 2 bis 5, **dadurch gekennzeichnet, dass** bei den Türrahmen (2, 3) ihre oberen Teile mit den oberen Seitenstücken (22, 24) des Oberrahmenabschnitts und ihre unteren Teile mit den oberen Bodenplatten (30, 31) verbunden sind.

7. Modulare Fahrerhausrahmenstruktur (1) nach einem der Ansprüche 1 bis 6, **dadurch gekennzeichnet, dass** die Türrahmen (2, 3) spiegelsymmetrisch konstruiert sind.

## Revendications

1. Structure de châssis de cabine modulaire (1) pour un camion de type à cabine sur moteur comprenant :
a) deux sections de châssis latérale formant les châssis (2, 3) pour les portes gauche et droite respectivement, chacune ayant une forme irrégulière et un premier élément de renfort (15.1, 15.2) pour chaque châssis de porte (2, 3) à la partie frontale ;
b) une section de châssis supérieure comprenant une traverse (23), deux éléments supérieurs latéraux (22, 24) et deux entretoises longitudinales (26.1, 26.2) ;
c) une section de châssis arrière (4) comprenant quatre éléments d'angle (19, 20), un supérieur (20) et un inférieur (19) de chaque côté, et deux montants de renfort (17, B) reliés aux deux renforts de panneaux arrière (37, 38) et allant jusqu'à ladite section de châssis supérieure ;
d) une section de châssis de plancher de forme irrégulière formant une cavité de préférence pour monter le moteur ;
e) une partie avant (7) comprenant un capot (34) pour supporter un moteur d'essuie-glace, un renfort de capot, un montant gauche (10, A) et un montant droit (11,A) assurant la liaison à ladite section de châssis supérieure ; et
f) une traverse de renfort de pare-brise (28) avec lesdits montants (10, A ; 11, A) et ladite traverse (23) formant une ouverture de pare-brise ;
**caractérisée en ce que** :
g) chaque châssis de porte (2, 3) comprend un second élément de renfort (18) à la partie arrière ;
h) ladite section de châssis supérieure comprend une barre transversale (27) reliée auxdits éléments supérieurs latéraux (22, 24) et auxdites entretoises longitudinales (26.1, 26.2) ; et
i) des traverses de support de plancher (13, 14) reliées entre elles dans ladite section de châssis arrière par un support de renfort arrière (36) et supportant des plaques de plancher (29, 30, 31, 41) et assurant la liaison audit support de renfort (36) de ladite section de châssis arrière (4) et audit panneau avant (7), la forme desdites traverses de support de plancher (13, 14) correspondant à ladite forme des châssis de portes (2, 3) et à la forme du plancher de la cabine.

2. Structure de châssis de cabine modulaire (1) selon la revendication 1, **caractérisée en ce que** le plancher de la cabine avec sa plaque de plancher supérieure (30, 31) est disposé horizontalement à partir de la section de châssis arrière et avec sa plaque de plancher intermédiaire (41) vers le bas à partir de la plaque de plancher supérieure horizontale (30, 31) et avec sa plaque de plancher inférieure (29) horizontalement vers une partie de plancher avant, sensiblement en suivant la forme de la partie inférieure desdits châssis de porte (2, 3).

3. Structure de châssis de cabine modulaire (1) selon les revendications 1 ou 2, **caractérisée en ce que** les parties sont faites d'acier à grande résistance, aluminium, thermoplastique, fibre de verre, pré-imprégné plastique (SMC) ou des combinaisons de ceux-ci.

4. Structure de châssis de cabine modulaire (1) selon l'une des revendications 1 à 3, **caractérisée en ce que** les panneaux et plaques sont fixés à la structure de châssis de cabine par des assemblages à grande résistance.

5. Structure de châssis de cabine modulaire (1) selon l'une des revendications 1 à 4, **caractérisée en ce que** la section de châssis arrière et la section de châssis supérieure sont des structures intégrées, leurs parties étant assemblées entre elles.

6. Structure de châssis de cabine modulaire (1) selon l'une des revendications 2 à 5, **caractérisée en ce que** les châssis de portes (2, 3) dans leurs parties supérieures sont assemblés aux éléments supérieurs latéraux (22, 24) de la section de châssis supérieure et à leurs parties inférieures sont assemblés aux plaques de plancher supérieures (30, 31).

7. Structure de châssis de cabine modulaire (1) selon l'une des revendications 1 à 6, **caractérisée en ce que** les châssis de porte (2, 3) sont faits en symétrie spéculaire.
